# EUROPEAN PATENT APPLICATION

(11) **EP 4 212 273 A1**
(43) Date of publication of application: **19.07.2023**
(21) Application number: 21866830.9
(22) Date of filing: 09.09.2021
(51) Int. Cl.: B23C 5/20, B23C 5/06

(54) **WIPER INSERT AND REPLACEABLE BLADE-TYPE MILLING CUTTER**

(30) Priority: 10.09.2020 JP 2020152217
(71) Applicant: Mitsubishi Materials Corporation, Tokyo 100-8117 (JP)
(72) Inventor: MIURA, Ryo, Tokyo 100-8117 (JP); WATANABE, Shota, Tokyo 100-8117 (JP)
(74) Representative: Hoffmann Eitle
(86) International application number: PCT/JP2021/033166
(87) International publication number: WO 2022/054872

(57) **Abstract**

A wiper insert includes three first corner portions and three second corner portions which are alternately aligned on a polygonal surface in an insert circumferential direction. A cutting edge has a first cutting edge that performs a finishing operation on a work material, and a second cutting edge. An outer peripheral surface has a first flank face, a second flank face, and a first restraint surface disposed outward from the second cutting edge in an insert radial direction. When viewed in an insert axial direction, an insert shape is rotationally symmetrical by 180° around a rotation center axis passing through the second corner portion adjacent to a first side of a predetermined first corner portion in the insert circumferential direction and an insert center axis.

## Description

### TECHNICAL FIELD

The present invention relates to a wiper insert and a replaceable blade-type milling cutter.

Priority is claimed on Japanese Patent Application No. 2020-152217, filed September 10, 2020, the content of which is incorporated herein by reference.

### BACKGROUND ART

As a replaceable blade-type milling cutter in the related art, for example, replaceable blade-type milling cutters disclosed in Patent Documents 1 to 3 are well known. The replaceable blade-type milling cutter includes a tool main body having a plurality of insert mounting seats, and a plurality of cutting inserts mounted on each insert mounting seat. The cutting insert has a major cutting edge protruding outward in a tool radial direction from the tool main body, and a minor cutting edge protruding to a tool tip side from the tool main body.

In Patent Document 1, a cutting edge is provided in a side ridge portion on a polygonal surface of the cutting insert, a portion of the cutting edge functions as a wiper blade protruding toward an outer peripheral side of the polygonal surface, and a remaining cutting edge functions as a normal cutting edge. One type of the cutting inserts can be used as a cutting insert for a normal cutting operation (rough machining), and can also be used as a wiper blade insert for a finishing operation. In Patent Document 1, the plurality of insert mounting seats mutually have the same shape, and the cutting insert can be mounted on any desired insert mounting seat even when the cutting insert is used for the rough machining or even when the cutting insert is used as the wiper blade insert for the finishing operation. In Patent Document 1, a major cutting edge adjacent to a wiper blade in the cutting insert used as the wiper blade insert is also used for the cutting operation.

In Patent Document 2, the plurality of insert mounting seats of the tool main body mutually have the same shape, and the plurality of cutting inserts mounted on each of the insert mounting seats include a standard machining insert used for standard machining (rough machining), and the wiper insert having an insert shape different from that of the standard machining insert and used for the finishing operation. The wiper insert has a flat drag and a major cutting edge adjacent to the flat drag, and the flat drag and the major cutting edge cut into a work material during the cutting operation. In addition, the wiper insert has a front-back inverted symmetrical shape, and each cutting edge disposed on each outer peripheral edge of a front surface and a back surface of the insert can be used. Therefore, a tool life is extended.

In Patent Document 3, the cutting insert has a hexagonal plate shape having a substantially trigon shape. The cutting insert has a pair of hexagonal surfaces. Six corner portions of the hexagonal surface have a first corner portion where an included angle between a pair of the side ridge portions is approximately 90°, and a second corner portion where the included angle between the pair of side ridge portions is an obtuse angle larger than the included angle of the first corner portion. Three first corner portions and three second corner portions are alternately aligned in a circumferential direction of the hexagonal surface. In addition, six side surfaces are provided on an outer peripheral surface of the cutting insert. When the cutting insert is mounted on the insert mounting seat, two side surfaces of the six side surfaces and two wall surfaces of the insert mounting seat come into contact with each other. The cutting insert in Patent Document 3 has a special shape as described above. Therefore, the shape of the insert mounting seat is complicated.

### [Citation List]

### [Patent Documents]

[Patent Document 1]
   Japanese Unexamined Patent Application, First Publication No. 2008-23660
[Patent Document 2]
   Japanese Unexamined Patent Application, First Publication No. 2015-150661
[Patent Document 3]
   Japanese Unexamined Patent Application, First Publication No. 2020-32499

### SUMMARY OF INVENTION

### Technical Problem

In Patent Document 3, when two types of the cutting inserts such as the rough machining insert and the wiper insert are mounted in any desired manner on the plurality of insert mounting seats mutually having the same shape, the following problems arise.

When the insert mounting seat has a complicated shape as in Patent Document 3, a shape of the wiper insert which can be mounted on the insert mounting seat also has hexagonal plate shape having a substantially trigon shape close to an insert shape of the rough machining insert. For example, in order to further improve machining accuracy of the wiper blade of the wiper insert and to prevent a defect of the cutting edge, it is conceivable to suppress contact between the cutting edge (particularly, the major cutting edge) other than the wiper blade and the work material. For this purpose, the major cutting edge of the wiper insert may be disposed to be retracted inward in a tool radial direction from a rotation trajectory around a tool center axis of the major cutting edge of the rough machining insert.

However, when the major cutting edge of the wiper insert is disposed to be retracted, the major cutting edge is disposed to be similarly retracted to a side surface forming a flank face of the major cutting edge of the wiper insert. Therefore, when the wiper insert is front-back inverted and mounted on the insert mounting seat, the side surface is disposed away from the wall surface of the insert mounting seat. That is, the side surface cannot come into contact with the wall surface, and the wiper insert cannot be restrained by the insert mounting seat. Therefore, the wiper insert cannot have a front-back inverted symmetrical shape (that is, a double surface type), and the wiper insert has to be a single surface type wiper insert having a short tool life.

An objective of the present invention is to provide a wiper insert which can be mounted in any desired manner on a plurality of insert mounting seats mutually having the same shape, can perform a finishing operation by using a wiper blade while suppressing contact between a cutting edge other than the wiper blade and a work material, and can extend a tool life while machining accuracy is improved with a front-back inverted symmetrical shape, and a replaceable blade-type milling cutter using the wiper insert.

### Solution to Problem

According to an aspect of the present invention, there is provided a wiper insert including a pair of polygonal surfaces facing mutually opposite sides in an insert axial direction in which an insert center axis extends, an outer peripheral surface connected to the pair of polygonal surfaces and facing outward in an insert radial direction, and a cutting edge disposed in a ridge line portion where the polygonal surface and the outer peripheral surface are connected. The polygonal surface has a plurality of side portions disposed along an outer peripheral edge of the polygonal surface, a first corner portion located between a pair of the side portions aligned in an insert circumferential direction, and a second corner portion disposed at a position different from a position of the first corner portion in the insert circumferential direction and located between a pair of the side portions aligned in the insert circumferential direction. Three first corner portions and three second corner portions are alternately aligned on the polygonal surface in the insert circumferential direction. When viewed in the insert axial direction, a first included angle between the pair of side portions located on both sides of the first corner portion in the insert circumferential direction is smaller than a second included angle between the pair of side portions located on both sides of the second corner portion in the insert circumferential direction. The cutting edge has a first cutting edge disposed in the side portion on a first side of a predetermined first corner portion of the three first corner portions in the insert circumferential direction, and performs a finishing operation on a work material, and a second cutting edge disposed in the side portion on a second side of the predetermined first corner portion in the insert circumferential direction. The outer peripheral surface has a first flank face connected to the first cutting edge, a second flank face connected to the second cutting edge, and a first restraint surface located on a side opposite to the second cutting edge of the second flank face in the insert axial direction and disposed outward from the second cutting edge in the insert radial direction. When viewed in the insert axial direction, an insert shape is rotationally symmetrical by 180° around a rotation center axis passing through the second corner portion adjacent to the first side of the predetermined first corner portion in the insert circumferential direction and the insert center axis.

In addition, according to another aspect of the present invention, there is provided a replaceable blade-type milling cutter including a tool main body having a plurality of insert mounting seats disposed at a distance from each other in a tool circumferential direction in a tip portion in a tool axial direction in which a tool center axis extends, the above-described wiper insert disposed in at least one of the plurality of insert mounting seats, and a rough machining insert disposed in the insert mounting seat different from the insert mounting seat in which the wiper insert is disposed. The rough machining insert has a major cutting edge protruding outward in a tool radial direction from the tool main body, and a minor cutting edge protruding to a tip side from the tool main body in the tool axial direction. The plurality of insert mounting seats mutually have the same shape. The first cutting edge is disposed on the tip side in the tool axial direction from the minor cutting edge. The second cutting edge is disposed inward from the major cutting edge in the tool radial direction.

In the replaceable blade-type milling cutter, two types of the cutting inserts such as a rough machining (standard machining) insert and a wiper insert can be mounted in any desired manner on a plurality of insert mounting seats mutually having the same shape.

According to the wiper insert of the present invention, the second cutting edge is disposed inward from the first restraint surface in the insert radial direction. Therefore, the second cutting edge is prevented from coming into contact with the work material. Specifically, in the replaceable blade-type milling cutter of the present invention, the second cutting edge of the wiper insert is disposed to be retracted inward in the tool radial direction from a rotation trajectory around the tool center axis of the major cutting edge of the rough machining insert. Therefore, the wiper insert cuts into the work material by using only the first cutting edge (wiper blade). Accordingly, accuracy in a finishing operation is stably improved.

When the wiper insert is mounted on the insert mounting seat by being front-back inverted (rotated by 180°) around the rotation center axis, the first restraint surface comes into contact with a first support surface of the insert mounting seat. Therefore, the wiper insert can be stably fixed to the insert mounting seat, even when the first cutting edge of any one of the pair of polygonal surfaces is used. That is, the wiper insert can be used as a double surface type, and thus, a tool life can be extended.

As described above, according to the wiper insert of the present invention, the wiper insert can be mounted in any desired manner on the plurality of insert mounting seats mutually having the same shape. A finishing operation can be performed by using the wiper blade while suppressing contact between the cutting edge other than the wiper blade and the work material. A tool life can be extended while machining accuracy is improved with a front-back inverted symmetrical shape.

In addition, the replaceable blade-type milling cutter of the present invention includes the above-described wiper insert. Therefore, the insert can be more freely disposed in the plurality of insert mounting seats, and the tool life can be extended while improving the machining accuracy.

In the above-described wiper insert, the second flank face may have an inclined surface shape inclined with respect to the insert center axis, and is located outward in the insert radial direction, as the second flank face is away from the second cutting edge in the insert axial direction. It is preferable that the first restraint surface is connected to the second flank face, and has a planar shape parallel to the insert center axis.

In this case, while the second cutting edge is retracted as described above, configurations of the second flank face and the first restraint surface can be simplified. Seating stability of the wiper insert on the insert mounting seat is improved by the first restraint surface having the simplified configuration, and insert manufacturing is facilitated.

In the above-described wiper insert, the polygonal surface may have a first rake face connected to the first cutting edge, and a seating surface disposed inward from the first rake face in the insert radial direction. The first rake face may have an inclined surface shape facing the other polygonal surface side from the polygonal surface in the insert axial direction, as the first rake face faces inward in the insert radial direction from the first cutting edge. It is preferable that the seating surface protrudes in the insert axial direction from the first cutting edge and the first rake face.

In this case, the first rake face is inclined toward a positive angle (positive angle) side. Therefore, cutting quality of the first cutting edge is stably improved. In addition, chips generated from the first cutting edge are likely to be broken by hitting a step (step portion) between the first rake face and the seating surface. Therefore, chip disposability is improved. In addition, the first cutting edge and the first rake face do not protrude from the seating surface in the insert axial direction. Therefore, when the wiper insert is front-back inverted and mounted on the insert mounting seat, the first cutting edge or the first rake face can be prevented from interfering with the insert mounting seat.

In the above-described wiper insert, the polygonal surface may have a second rake face connected to the second cutting edge. It is preferable that the seating surface is disposed inward from the second rake face in the insert radial direction, and protrudes in the insert axial direction from the second cutting edge and the second rake face.

In this case, the second cutting edge and the second rake face do not protrude from the seating surface in the insert axial direction. Therefore, when the wiper insert is front-back inverted and mounted on the insert mounting seat, the second cutting edge or the second rake face can be prevented from interfering with the insert mounting seat.

In the above-described wiper insert, the cutting edge may have a corner cutting edge connected to an end portion on the second side of the first cutting edge in the insert circumferential direction and an end portion on a first side of the second cutting edge in the insert circumferential direction. When viewed in the insert axial direction, it is preferable that each of an included angle between the first cutting edge and the corner cutting edge and an included angle between the second cutting edge and the corner cutting edge is an obtuse angle.

For example, compared to a configuration in which the first cutting edge and the second cutting edge are directly connected, according to the above-described configuration of the present invention, strength of the cutting edge is increased, and a defect of an edge tip is prevented.

In the above-described wiper insert, when viewed in the insert axial direction, it is preferable that the first cutting edge has a convex curve shape bulging outward in the insert radial direction.

In this case, for example, even when the tool center axis of the tool main body on which the wiper insert is mounted is slightly inclined with respect to the work material due to cutting resistance during a cutting operation, accuracy in a machined surface is stably ensured by the first cutting edge.

In the wiper insert described above, it is preferable that the outer peripheral surface has a second restraint surface adjacent to the second side of the first restraint surface in the insert circumferential direction.

In the above-described replaceable blade-type milling cutter, the outer peripheral surface of the wiper insert may have a second restraint surface disposed at a position different from a position of the first restraint surface in the insert circumferential direction. It is preferable that the insert mounting seat has a bottom surface coming into contact with a seating surface of the polygonal surface, a first support surface coming into contact with the first restraint surface, and a second support surface coming into contact with the second restraint surface.

In this case, the wiper insert is restrained to the insert mounting seat in the insert radial direction and the insert circumferential direction by the first restraint surface and the second restraint surface. Seating stability of the wiper insert on the insert mounting seat is further improved.

### Advantageous Effects of Invention

According to the wiper insert in one aspect of the present invention, the wiper insert can be mounted in any desired manner on the plurality of insert mounting seats mutually having the same shape. A finishing operation can be performed by using the wiper blade while suppressing contact between the cutting edge other than the wiper blade and the work material. A tool life can be extended while machining accuracy is improved with a front-back inverted symmetrical shape.

In addition, the replaceable blade-type milling cutter in another aspect of the present invention includes the above-described wiper insert. Therefore, the insert can be more freely disposed in the plurality of insert mounting seats, and the tool life can be extended while the machining accuracy is improved.

### BRIEF DESCRIPTION OF DRAWINGS

FIG. 1 is a perspective view showing a wiper insert of the present embodiment.
FIG. 2 is a plan view when the wiper insert is viewed in an insert axial direction.
FIG. 3 is a side view of the wiper insert.
FIG. 4 is a side view when the wiper insert in FIG. 2 is viewed in a direction of an arrow IV.
FIG. 5 is a perspective view showing a replaceable blade-type milling cutter of the present embodiment, and representation of a rough machining insert is omitted.
FIG. 6 is a side view showing the replaceable blade-type milling cutter, and representation of the rough machining inserts is omitted.
FIG. 7 is a side view showing the replaceable blade-type milling cutter, and representation of the rough machining inserts is omitted.
FIG. 8 is an enlarged perspective view showing a vicinity of an insert mounting seat of a tool main body.
FIG. 9 is a side view showing a part of the replaceable blade-type milling cutter, and is a front view when a polygonal surface of the rough machining insert is viewed in a tool rotation direction.
FIG. 10 is a perspective view showing the rough machining insert mounted on the insert mounting seat.

### DESCRIPTION OF EMBODIMENTS

A wiper insert 1 and a replaceable blade-type milling cutter 10 according to an embodiment of the present invention will be described with reference to the drawings.

### [Schematic Configuration of Replaceable Blade-Type Milling Cutter]

The replaceable blade-type milling cutter 10 of the present embodiment is a cutting tool (milling tool) for performing a milling task such as face milling on a work material made of metal. For example, in other words, the replaceable blade-type milling cutter 10 may also be referred to as a replaceable blade-type face milling cutter, a replaceable blade-type mill, or a replaceable blade-type face mill.

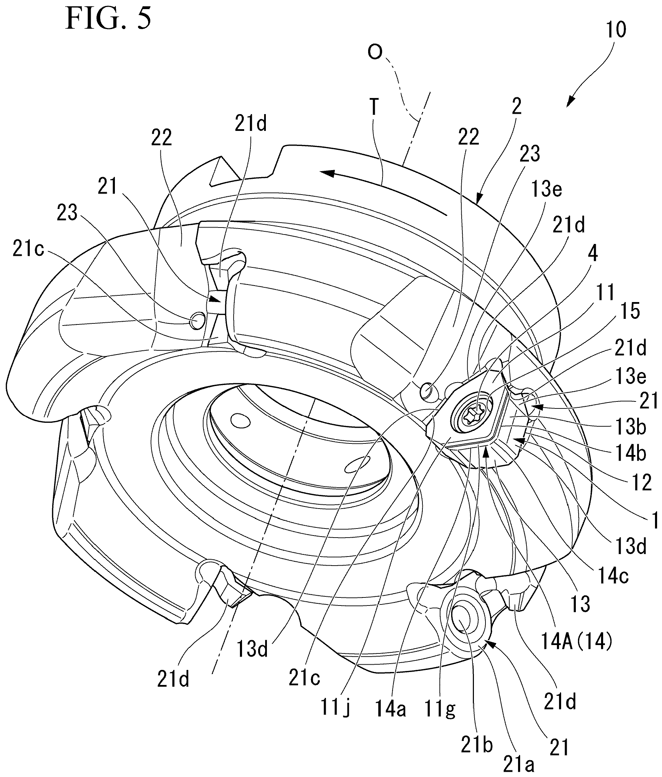

As represented in FIGS. 5 to 7, 9, and 10, the replaceable blade-type milling cutter 10 includes a tool main body 2, a wiper insert 1 for a finishing operation, a rough machining insert 3 for rough machining (standard machining), and a screw member 4 such as a clamp screw. In FIGS. 5 to 7, representation of the rough machining insert 3 is omitted.

The tool main body 2 has a pillar shape around a tool center axis O. The tool main body 2 is detachably mounted on a spindle of a machine tool (not represented). The tool main body 2 is rotated around the tool center axis O by the spindle of the machine tool. In the tool main body 2, the spindle of the machine tool is connected to a first end portion in both ends in a tool axial direction in which the tool center axis O extends, and the wiper insert 1 and the rough machining insert 3 are disposed in a second end portion. In other words, the first end portion of the tool main body 2 may be referred to as a spindle mounting portion, and in other words, the second end portion may be referred to as an edge portion.

In the present embodiment, at least one wiper insert 1 is provided in the replaceable blade-type milling cutter 10. A plurality of the rough machining inserts 3 are provided in the replaceable blade-type milling cutter 10.

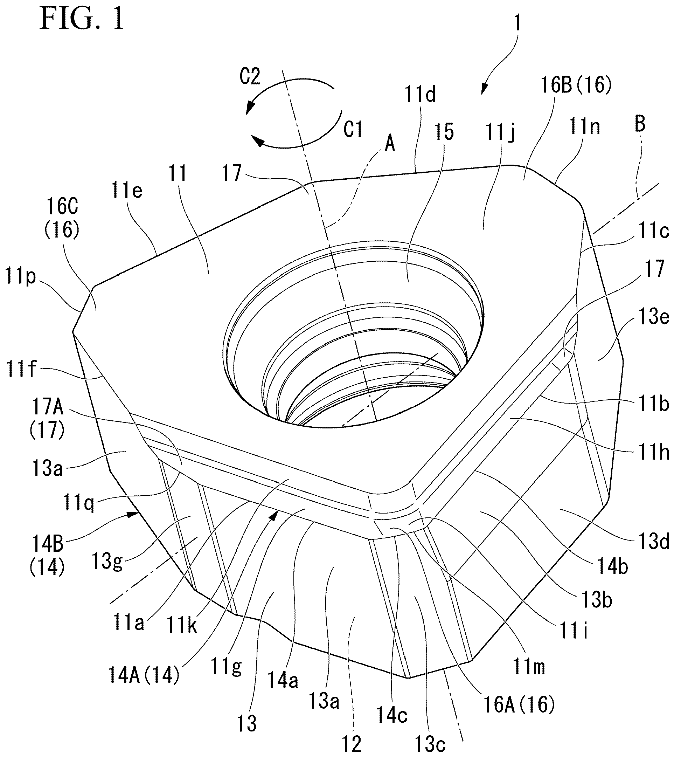

As represented in FIGS. 1 to 4, the wiper insert 1 has a hexagonal plate shape having a substantially trigon shape around an insert center axis A. The wiper insert 1 includes a pair of polygonal surfaces 11 and 12 facing mutually opposite sides in an insert axial direction which is a direction in which the insert center axis A extends, an outer peripheral surface 13 connected to the pair of polygonal surfaces 11 and 12, a cutting edge 14 disposed in a ridge line portion where the polygonal surfaces 11 and 12 and the outer peripheral surface 13 are connected, and a through hole 15 open on the pair of polygonal surfaces 11 and 12.

### [Definition of Directions]

In the present embodiment, a direction in which the insert center axis A of the wiper insert 1 extends, that is, a direction along the insert center axis A will be referred to as the insert axial direction. In other words, the insert axial direction may be referred to as a thickness direction of the wiper insert 1. In the insert axial direction, a direction from one polygonal surface (first polygonal surface) 11 to the other polygonal surface (second polygonal surface) 12 of the wiper insert 1 will be referred to as a back surface side in the insert axial direction, and a direction from the other polygonal surface 12 to the one polygonal surface 11 will be referred to as a front surface side in the insert axial direction.

A direction orthogonal to the Insert center axis A will be referred to as an insert radial direction. In the insert radial direction, a direction closer to the insert center axis A will be referred to as inward in the insert radial direction, and a direction away from the insert center axis A will be referred to as outward in the insert radial direction.

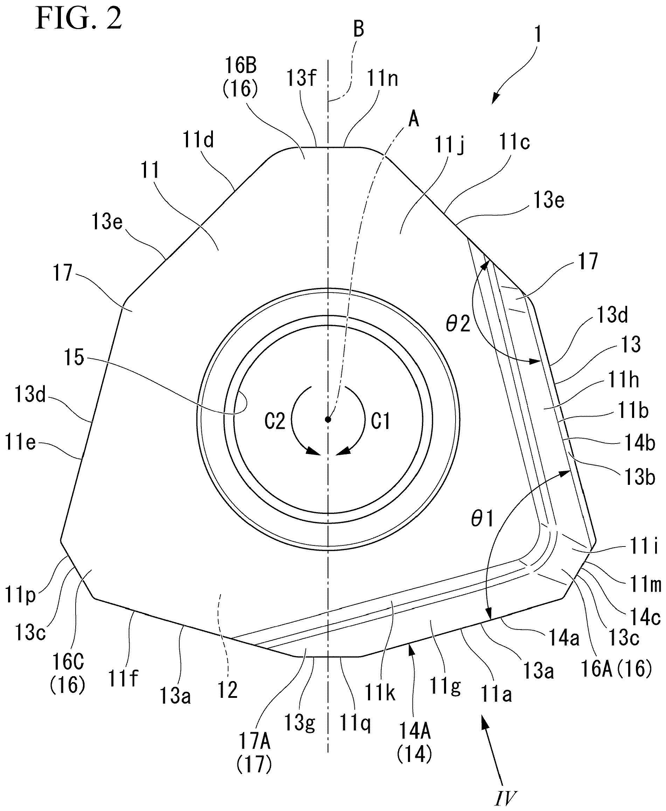

A direction of turning around the insert center axis A will be referred to as an insert circumferential direction. A predetermined direction in the insert circumferential direction will be referred to as a first side C1 in the insert circumferential direction, and a direction opposite to the predetermined direction will be referred to as the second side C2 in the insert circumferential direction. In the present embodiment, as represented in FIG. 2, when the one polygonal surface 11 is viewed in a front view in the insert axial direction, a clockwise direction around the insert center axis A corresponds to the first side C1 in the insert circumferential direction, and a counterclockwise direction corresponds to the second side C2 in the insert circumferential direction.

In addition, as represented in FIG. 5, in the present embodiment, the direction in which the tool center axis O of the tool main body 2 extends, that is, a direction along the tool center axis O will be referred to as the tool axial direction. In the tool axial direction, a direction from the first end portion (spindle mounting portion) toward the second end portion (edge portion) of the tool main body 2 will be referred to as a tip side, and a direction from the second end portion toward the first end portion will be referred to as a rear end side.

A direction orthogonal to the tool center axis O will be referred to as a tool radial direction. In the tool radial direction, a direction closer to the tool center axis O will be referred to as inward in the tool radial direction, and a direction away from the tool center axis O will be referred to as outward in the tool radial direction.

A direction of turning around the tool center axis O will be referred to as a tool circumferential direction. In the tool circumferential direction, a direction in which the tool main body 2 is rotated by the spindle during a milling task will be referred to as a tool rotation direction T, and a rotation direction opposite thereto will be referred to as a direction opposite to the tool rotation direction T, or simply a counter-tool rotation direction.

### [Wiper Insert]

First, the wiper insert 1 will be described with reference to FIGS. 1 to 4. The wiper insert 1 is made of cemented carbide, for example. The wiper insert 1 has a front-back inverted symmetrical shape. That is, the wiper insert 1 is a double surface type cutting insert.

### [Description 1 of Polygonal Surface]

The wiper insert 1 has the front-back inverted symmetrical shape. Accordingly, the pair of polygonal surfaces 11 and 12 mutually have the same configuration. Therefore, in the following description, one polygonal surface 11 will be described, and description of the other polygonal surface 12 will be omitted. Although not represented, at least one of the pair of polygonal surfaces 11 and 12 may be provided with an identification mark for identifying each of the polygonal surfaces 11 and 12.

The polygonal surface 11 faces the insert axial direction. The polygonal surface 11 has a hexagonal shape. The polygonal surface 11 has a plurality of side portions 1 1a, 11b, 11c, 11d, 11e, and 11f disposed along an outer peripheral edge of the polygonal surface 11, a first corner portion 16 located between the pair of side portions aligned in the insert circumferential direction, and a second corner portion 17 disposed at a position different from a position of the first corner portion 16 in the insert circumferential direction and located between the pair of side portions aligned in the insert circumferential direction.

As represented in FIG. 2, corresponding to the hexagonal shape of the polygonal surface 11, six side portions 11a, 11b, 11c, 11d, 11e, and 11f are disposed on the outer peripheral edge of the polygonal surface 11. Three first corner portions 16 and three second corner portions 17 are alternately aligned on the polygonal surface 11 in the insert circumferential direction.

Specifically, the three first corner portions 16 are disposed between the pair of side portions 11a and 11b, between the pair of side portions 11c and 11d, and between the pair of side portions 11e and 11f, which are aligned in the insert circumferential direction. The three second corner portions 17 are disposed between the pair of side portions 11b and 11c, between the pair of side portions 11d and 11e, and between the pair of side portions 11f and 11a, which are aligned in the insert circumferential direction.

In an example of the present embodiment, the polygonal surface 11 is disposed in the outer peripheral edge of the polygonal surface 11, and has a plurality of connecting side portions 11m, 11n, 11p, and 11q whose side lengths are shorter than those of the side portions 11a, 11b, 11c, 11d, 11e, and 11f. In other words, description of the "connecting side portion" may be referred to as a chamfer portion. Therefore, it can be described that the wiper insert 1 has a decagon plate shape having a substantially trigon shape.

The connecting side portion 11m is disposed at a predetermined first corner portion 16A in the three first corner portions 16, and connects the pair of side portions 11a and 11b. Both ends of the connecting side portion 11m are connected to an end portion of the side portion 11a on the second side C2 in the insert circumferential direction and an end portion of the side portion 11b on the first side C1 in the insert circumferential direction.

The connecting side portion 11n is disposed in the other first corner portion 16B adjacent to the second side C2 in the insert circumferential direction of the predetermined first corner portion 16A in the three first corner portions 16, and connects the pair of side portions 11c and 11d. Both ends of the connecting side portion 11n are connected to an end portion of the side portion 11c on the second side C2 in the insert circumferential direction and an end portion of the side portion 11d on the first side C1 in the insert circumferential direction.

The connecting side portion 11p is disposed in the other first corner portion 16C other than the first corner portions 16A and 16B in the three first corner portions 16, and connects the pair of side portions 11e and 11f. Both ends of the connecting side portion 11p are connected to an end portion of the side portion 1 1e on the second side C2 in the insert circumferential direction and an end portion of the side portion 11f on the first side C1 in the insert circumferential direction.

The connecting side portion 11q is disposed in the second corner portion 17A adjacent to the first side C1 in the insert circumferential direction of the predetermined first corner portion 16A in the three second corner portions 17, and connects the pair of side portions 11f and 11a. Both ends of the connecting side portion 11q are connected to the end portion of the side portion 11f on the second side C2 in the insert circumferential direction and an end portion of the side portion 11a on the first side C1 in the insert circumferential direction.

As represented in FIG. 2, when viewed in the insert axial direction, a first included angle θ1 between the pair of side portions located on both sides of the first corner portion 16 in the insert circumferential direction is smaller than a second included angle θ2 between the pair of side portions located on both sides of the second corner portion 17 in the insert circumferential direction. For example, the first included angle θ1 is approximately 90°. For example, the second included angle θ2 is an obtuse angle larger than 90°, and is approximately 150°.

Configurations of the polygonal surface 11 other than those described above will be described separately later.

### [Cutting Edge]

A pair of the cutting edges 14 are provided in a ridge line portion where one polygonal surface 11 and the outer peripheral surface 13 are connected and a ridge line portion where the other polygonal surface 12 and the outer peripheral surface 13 are connected. The wiper insert 1 has the front-back inverted symmetrical shape. Accordingly, the pair of cutting edges 14 mutually have the same configuration. Therefore, in the following description, in the pair of cutting edges 14, one cutting edge 14A disposed in the outer peripheral edge of one polygonal surface 11 will be described, and the other cutting edge 14B disposed in the outer peripheral edge of the other polygonal surface 12 will be omitted in the description.

One cutting edge 14A is disposed in the side portion 11a on the first side C1 of the predetermined first corner portion 16A in the three first corner portions 16 of the polygonal surface 11 in the insert circumferential direction, and has a first cutting edge 14a for performing a finishing operation on a work material, a second cutting edge 14b disposed in the side portion 11b on the second side C2 of the predetermined first corner portion 16A in the insert circumferential direction, and a corner cutting edge 14c connected to an end portion on the second side C2 of the first cutting edge 14a in the insert circumferential direction and an end portion on the first side C1 of the second cutting edge 14b in the insert circumferential direction. As represented in FIG. 2, the cutting edge 14A has a substantially L-shape as a whole when viewed in the insert axial direction.

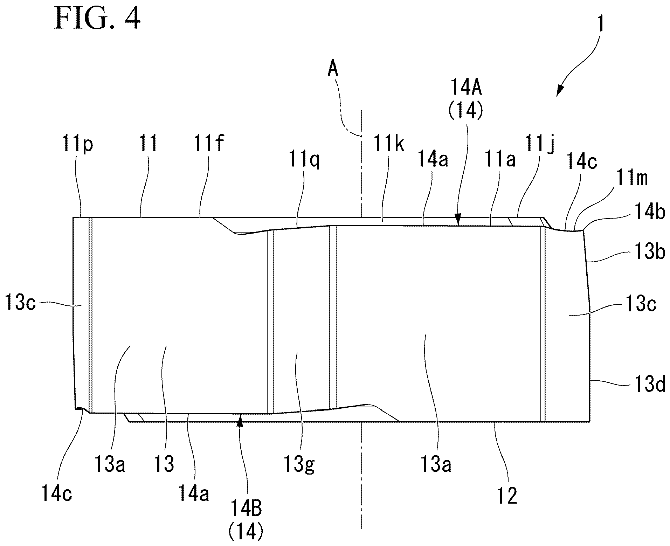

In other words, the first cutting edge 14a may be referred to as a wiper blade, a flat drag, or a minor cutting edge. The first cutting edge 14a extends along the side portion 11a adjacent to the first side C1 of the predetermined first corner portion 16A in the insert circumferential direction. As represented in FIG. 2, the first cutting edge 14a extends in a substantially linear shape on the side portion 11a when viewed in the insert axial direction. Specifically, in the present embodiment, the first cutting edge 14a has a convex curve shape bulging outward in the insert radial direction when viewed in the insert axial direction. The first cutting edge 14a is curved with a large curvature radius (for example, R500 mm) when viewed in the insert axial direction, and slightly bulges outward in the insert radial direction. In addition, as represented in FIG. 4, the first cutting edge 14a extends in a linear shape when viewed in the insert radial direction.

In other words, the second cutting edge 14b may be referred to as a major cutting edge, based on a cutting edge layout thereof. However, as will be described later, the second cutting edge 14b is a dummy cutting edge which is not used for a cutting operation. Therefore, the second cutting edge 14b does not actually function as the major cutting edge. The second cutting edge 14b extends along the side portion 11b adjacent to the second side C2 of the predetermined first corner portion 16A in the insert circumferential direction. As represented in FIG. 2, the second cutting edge 14b extends in a linear shape on the side portion 11b when viewed in the insert axial direction.

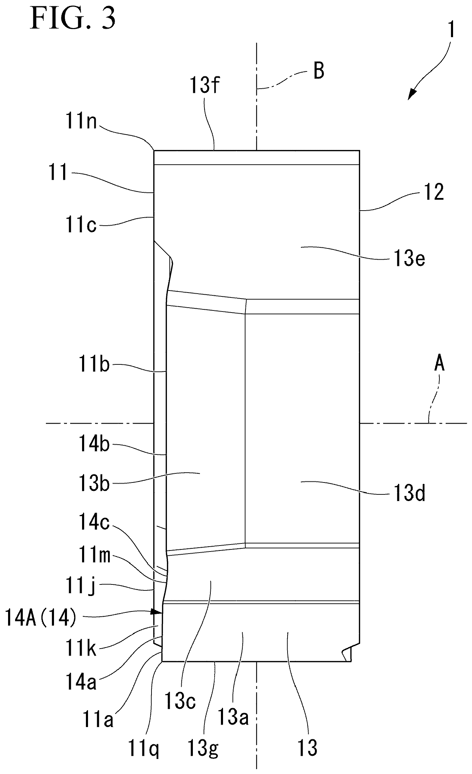

The corner cutting edge 14c is disposed in the connecting side portion 11m of the predetermined first corner portion 16A. When viewed in the insert axial direction, the corner cutting edge 14c extends in a linear shape on the connecting side portion 11m. When viewed in the insert axial direction, each of an included angle between the first cutting edge 14a and the corner cutting edge 14c and an included angle between the second cutting edge 14b and the corner cutting edge 14c is an obtuse angle. As represented in FIGS. 3 and 4, when viewed in the insert radial direction, the corner cutting edge 14c has a recessed curved line shape recessed (to a back surface side) in the insert axial direction. An edge length of the corner cutting edge 14c is shorter than each edge length of the first cutting edge 14a and the second cutting edge 14b.

### [Description 2 of Polygonal Surface]

As represented in FIGS. 1 and 2, the polygonal surface 11 has a first rake face 11g, a second rake face 11h, a corner rake face 11i, a seating surface 11j, and a step portion 11k.

The first rake face 11g is connected to the first cutting edge 14a. The first rake face 11g is disposed inside the first cutting edge 14a in the insert radial direction. The first rake face 11g has an inclined surface shape facing the other polygonal surface 12 side from the polygonal surface 11 in the insert axial direction (that is, toward the back surface side in the insert axial direction) as the first rake face 11g faces inward in the insert radial direction from the first cutting edge 14a. That is, the first rake face 11g is inclined to a positive angle (positive angle) side with respect to a virtual plane perpendicular to the insert center axis A. In the present embodiment, the first rake face 11g has a planar shape.

The second rake face 11h is connected to the second cutting edge 14b. The second rake face 11h is disposed inside the second cutting edge 14b in the insert radial direction. The second rake face 11h has an inclined surface shape facing the back surface side in the insert axial direction as the second rake face 11h faces inward in the insert radial direction from the second cutting edge 14b. That is, the second rake face 11h is inclined to the positive angle side with respect to the virtual plane perpendicular to the insert center axis A. In the present embodiment, the second rake face 1 1h has a planar shape.

The corner rake face 11i is connected to the corner cutting edge 14c. The corner rake face 11i is disposed inside the corner cutting edge 14c in the insert radial direction. The corner rake face 11i has an inclined surface shape facing the back surface side in the insert axial direction as the corner rake face 11i faces inward in the insert radial direction from the corner cutting edge 14c. That is, the corner rake face 11i is inclined to the positive angle side with respect to the virtual plane perpendicular to the insert center axis A. In the present embodiment, the corner rake face 11i has a recessed curved face shape. An end portion of the corner rake face 11i on the first side C1 in the insert circumferential direction is connected to an end portion of the first rake face 1 1g on the second side C2 in the insert circumferential direction. An end portion of the corner rake face 11i on the second side C2 in the insert circumferential direction is connected to an end portion of the second rake face 11h on the first side C1 in the insert circumferential direction.

The seating surface 11j is disposed inward from the first rake face 11g, the second rake face 11h and the corner rake face 11i in the insert radial direction. The seating surface 11j has a planar shape spreading in a direction perpendicular to the insert center axis A.

As represented in FIGS. 1, 3, and 4, the seating surface 11j protrudes in the insert axial direction from the first cutting edge 14a and the first rake face 11g. That is, the seating surface 11j of the polygonal surface 11 is located on a front surface side in the insert axial direction from the first cutting edge 14a and the first rake face 11g.

The seating surface 11j protrudes in the insert axial direction from the second cutting edge 14b and the second rake face 11h. That is, the seating surface 11j of the polygonal surface 11 is located on the front surface side in the insert axial direction from the second cutting edge 14b and the second rake face 11h.

The seating surface 11j protrudes in the insert axial direction from the corner cutting edge 14c and the corner rake face 11i. That is, the seating surface 1 1j of the polygonal surface 11 is located on the front surface side in the insert axial direction from the corner cutting edge 14c and the corner rake face 11i.

The step portion 11k is disposed between the first rake face 11g, the second rake face 11h, the corner rake face 11i, and the seating surface 11j in the insert radial direction. The step portion 11k has an inclined surface shape inclined with respect to the insert center axis A, and is located on the front surface side in the insert axial direction as the step portion 11k faces inward in the insert radial direction. The step portion 11k is an inclined surface facing outward in the insert radial direction. As represented in FIG. 2, the step portion 11k extends in a substantially L-shape along the cutting edge 14 when viewed in the insert axial direction.

### [Outer Peripheral Surface]

As represented in FIGS. 1, 3, and 4, the outer peripheral surface 13 faces outward in the insert radial direction, and extends in the insert circumferential direction. The outer peripheral surface 13 has an annular shape around the insert center axis A.

The outer peripheral surface 13 has a first flank face 13a, a second flank face 13b, a corner flank face 13c, a first restraint surface 13d, and a second restraint surface 13e. The wiper insert 1 has a front-back inverted symmetrical shape. Accordingly, the first flank face 13a, the second flank face 13b, the corner flank face 13c, the first restraint surface 13d, and the second restraint surface 13e are provided in pairs (that is, two each) on the outer peripheral surface 13.

The first flank face 13a is connected to the first cutting edge 14a. The first flank face 13a is disposed on the back surface side of the first cutting edge 14a in the insert axial direction. The first flank face 13a has a substantially planar shape parallel to the insert center axis A. Specifically, in the present embodiment, the first flank face 13a is parallel to the insert center axis A, and has a cylindrical surface slightly projecting outward in the insert radial direction. The first flank face 13a is disposed between the first cutting edge 14a and a first side portion (side portion corresponding to the side portion 11f of one polygonal surface 11) of the other polygonal surface 12 in the insert axial direction, that is, over an entire length of the outer peripheral surface 13 in the insert axial direction.

The second flank face 13b is connected to the second cutting edge 14b. The second flank face 13b is disposed on the back surface side of the second cutting edge 14b in the insert axial direction. The second flank face 13b has an inclined surface shape inclined with respect to the insert center axis A, and is located outward from the insert radial direction as the second flank face 13b is away from the second cutting edge 14b in the insert axial direction. The second flank face 13b is disposed on a front surface side portion of the outer peripheral surface 13 in the insert axial direction. Specifically, the second flank face 13b is disposed from the second cutting edge 14b toward the back surface side in the insert axial direction, for example, over a range of 1/3 to 1/2 of the entire length of the outer peripheral surface 13 in the insert axial direction.

The corner flank face 13c is connected to the corner cutting edge 14c. The corner flank face 13c is disposed on the back surface side of the corner cutting edge 14c in the insert axial direction. The corner flank face 13c has a planar shape parallel to the insert center axis A. The corner flank face 13c is disposed in the insert axial direction between the corner cutting edge 14c and one connecting side portion of the other polygonal surface 12 (connecting side portion corresponding to the connecting side portion 11p of the one polygonal surface 11). That is, the corner flank face 13c is disposed over the entire length of the outer peripheral surface 13 in the insert axial direction. The corner flank face 13c is located between the first flank face 13a, the second flank face 13b, and the first restraint surface 13d in the insert circumferential direction.

The first restraint surface 13d is located on a side opposite to the second cutting edge 14b of the second flank face 13b in the insert axial direction. That is, the first restraint surface 13d is located on the back surface side of the second flank face 13b in the insert axial direction. The first restraint surface 13d is connected to the second flank face 13b, and has a planar shape parallel to the insert center axis A. The first restraint surface 13d is disposed between the second flank face 13b and a first side portion (side portion corresponding to the side portion 11e of the one polygonal surface 11) of the other polygonal surface 12 in the insert axial direction. The first restraint surface 13d is disposed in the back surface side portion of the outer peripheral surface 13 in the insert axial direction. Specifically, the first restraint surface 13d is disposed from the first side portion of the other polygonal surface 12 toward the front surface side in the insert axial direction, for example, over a range of 1/2 to 2/3 of the entire length of the outer peripheral surface 13 in the insert axial direction.

As represented in FIGS. 2 and 4, the first restraint surface 13d is disposed outward from the second cutting edge 14b in the insert radial direction. In other words, the second cutting edge 14b is disposed to be retracted inward in the insert radial direction from the first restraint surface 13d.

As represented in FIG. 2, the first restraint surface 13d is located in the insert circumferential direction between the predetermined first corner portion 16A and the second corner portion 17 adjacent to the second side C2 of the predetermined first corner portion 16A in the insert circumferential direction.

As represented in FIGS. 1 and 3, the second restraint surface 13e is disposed at a position different from a position of the first restraint surface 13d in the insert circumferential direction. The second restraint surface 13e is disposed adjacent to the second side C2 of the second flank face 13b and the first restraint surface 13d in the insert circumferential direction. The second restraint surface 13e has a planar shape parallel to the insert center axis A. The second restraint surface 13e is disposed in the insert axial direction between the first side portion 11c of the one polygonal surface 11 and the first side portion (side portion corresponding to the side portion 11d of the one polygonal surface 11) of the other polygonal surface 12. That is, the second restraint surface 13e is disposed over the entire length of the outer peripheral surface 13 in the insert axial direction.

As represented in FIG. 2, the second restraint surface 13e is located in the insert circumferential direction between the first corner portion 16B and the second corner portion 17 adjacent to the first side C1 of the first corner portion 16B in the insert circumferential direction.

As represented in FIGS. 2 and 3, a portion 13f connected to the connecting side portion 11n of the first corner portion 16B in the outer peripheral surface 13, that is, the portion 13f located on the back surface side of the connecting side portion 11n of the outer peripheral surface 13 in the insert axial direction has a planar shape parallel to the insert center axis A. Therefore, in other words, the portion 13f may be referred to as a planar portion 13f. The portion 13f of the outer peripheral surface 13 is disposed in the insert axial direction between the connecting side portion 11n and one connecting side portion (connecting side portion corresponding to the connecting side portion 11n of the polygonal surface 11) of the other polygonal surface 12. That is, the portion 13f is disposed over the entire length of the outer peripheral surface 13 in the insert axial direction. The portion 13f of the outer peripheral surface 13 is located in the insert circumferential direction between the pair of second restraint surfaces 13e and 13e.

As represented in FIGS. 1 to 4, a portion 13g connected to the connecting side portion 11q of the second corner portion 17A in the outer peripheral surface 13, that is, the portion 13g located on the back surface side of the connecting side portion 1 1q of the outer peripheral surface 13 in the insert axial direction has a planar shape parallel to the insert center axis A. Therefore, in other words, the portion 13g may be referred to as a planar portion 13g. The portion 13g of the outer peripheral surface 13 is disposed in the insert axial direction between the connecting side portion 11q and one connecting side portion (connecting side portion corresponding to the connecting side portion 11q of the polygonal surface 11) of the other polygonal surface 12. That is, the portion 13g is disposed over the entire length of the outer peripheral surface 13 in the insert axial direction. The portion 13g of the outer peripheral surface 13 is located in the insert circumferential direction between the pair of first flank faces 13a and 13a.

### [Through Hole]

As represented in FIGS. 1 and 2, the through hole 15 penetrates the wiper insert 1 in the insert axial direction. The through hole 15 extends into the wiper insert 1 in the insert axial direction, and is open in each central portion of the polygonal surfaces 11 and 12. The through hole 15 is a multistage circular hole around the insert center axis A. An inner diameter of the through hole 15 varies at each position in the insert axial direction. Specifically, the inner diameters of both ends of the through hole 15 in the insert axial direction, that is, a pair of openings are larger than the inner diameter of the central portion of the through hole 15 in the insert axial direction.

As represented in FIG. 2, in the wiper insert 1 of the present embodiment, when viewed in the insert axial direction, an insert shape is rotationally symmetrical by 180° around a rotation center axis B passing through the second corner portion 17A adjacent to the first side C1 of the predetermined first corner portion 16A in the insert circumferential direction, the insert center axis A, and the other first corner portion 16B different from the predetermined first corner portion 16A. That is, the wiper insert 1 has a front-back inverted symmetrical shape around the rotation center axis B. In other words, the rotation center axis B may be referred to as a rotation symmetry axis. When viewed in the insert axial direction, the rotation center axis B does not pass through the predetermined first corner portion 16A where the cutting edge 14 is located.

The rotation center axis B is orthogonal to the insert center axis A. That is, the rotation center axis B extends in the insert radial direction. As represented in FIG. 1, the rotation center axis B passes through the central portion of the outer peripheral surface 13 in the insert axial direction. Specifically, the rotation center axis B passes through each central portion of the planar portions 13f and 13g of the outer peripheral surface 13 in the insert axial direction.

### [Rough Machining Insert]

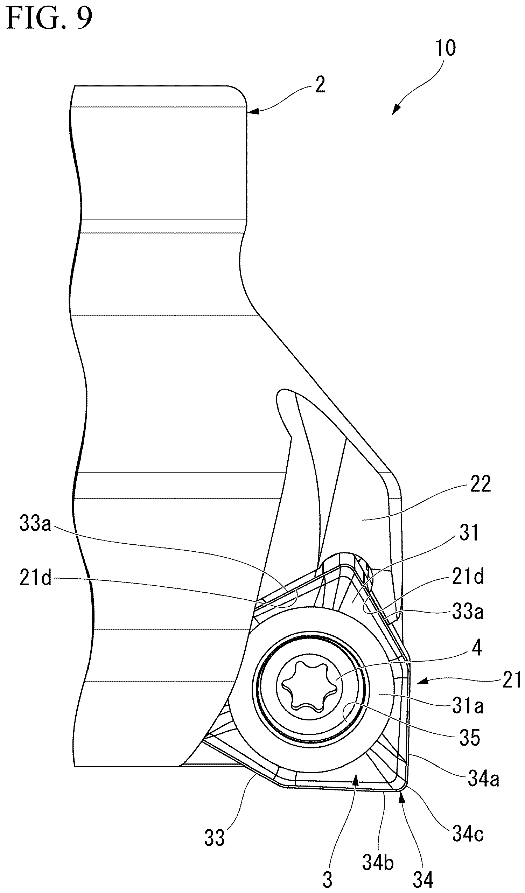

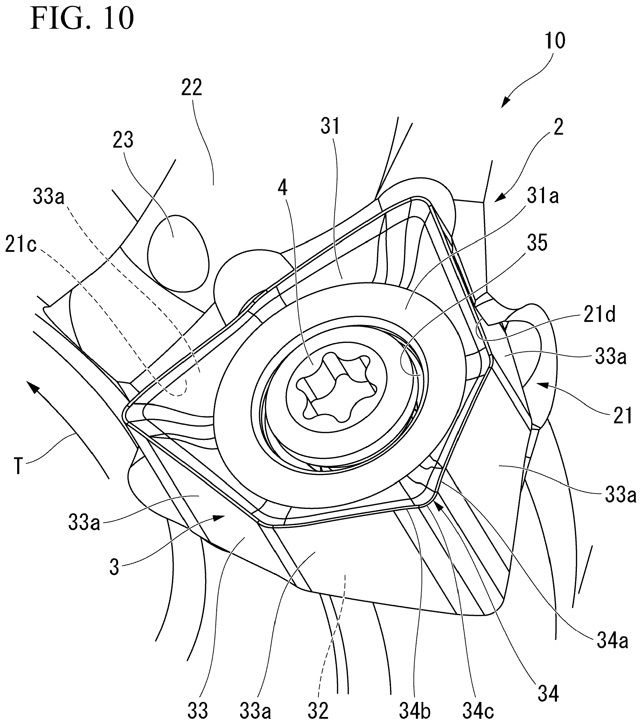

Next, the rough machining insert 3 will be described with reference to FIGS. 9 and 10. The rough machining insert 3 is made of cemented carbide, for example. The rough machining insert 3 has a front-back inverted symmetrical shape. That is, the rough machining insert 3 is a double surface type cutting insert.

As the rough machining insert 3 of the present embodiment, for example, a cutting insert disclosed in Patent Document 3 (Japanese Unexamined Patent Application, First Publication No. 2020-32499) included in Citation List can be used. Therefore, in the following description, only a basic configuration of the rough machining insert 3 will be described, and detailed description will be omitted.

As represented in FIGS. 9 and 10, the rough machining insert 3 has a hexagonal plate shape having a substantially trigon shape. The rough machining insert 3 includes a pair of polygonal surfaces 31 and 32 facing mutually opposite sides in the insert axial direction, an outer peripheral surface 33 connected to the pair of polygonal surfaces 31 and 32, a cutting edge 34 disposed in a ridge line portion connected to the polygonal surfaces 31 and 32 and the outer peripheral surface 33, and a through hole 35 which is open on the pair of polygonal surfaces 31 and 32.

The rough machining insert 3 has the front-back inverted symmetrical shape. Accordingly, the pair of polygonal surfaces 31 and 32 have the same configuration. Therefore, one polygonal surface 31 will be described here, and the other polygonal surface 32 will be omitted in the description.

The polygonal surface 31 has a seating surface 31a. The seating surface 31a has a planar shape spreading in a direction perpendicular to the insert center axis (not represented). The cutting edge 34 is disposed in the outer peripheral edge of the polygonal surface 31. The cutting edge 34 has a major cutting edge 34a, a minor cutting edge 34b, and a corner edge 34c.

The outer peripheral surface 33 has a plurality of restraint surfaces 33a. Six restraint surfaces 33a are aligned on the outer peripheral surface 33 in the insert circumferential direction. Each of the restraint surfaces 33a has a planar shape parallel to the insert center axis.

### [Tool Main Body]

Next, the tool main body 2 will be described with reference to FIGS. 5 to 8. The tool main body 2 is made of metal such as steel, for example. The tool main body 2 has a pillar shape or a tubular shape. As represented in FIG. 5, in the present embodiment, the tool main body 2 has a columnar shape or a cylindrical shape. The tool main body 2 may have a disc shape. An outer diameter of the tip portion of the tool main body 2 in the tool axial direction is larger than an outer diameter of the rear end portion. That is, in the tool main body 2, an outer diameter of a second end portion (edge portion) is larger than an outer diameter of a first end portion (spindle mounting portion).

The tool main body 2 has an insert mounting seat 21, a chip pocket 22, and a coolant hole 23.

### [Insert Mounting Seat]

The insert mounting seat 21 is disposed in the tip portion of the tool main body 2 in the tool axial direction. The insert mounting seat 21 has a recessed shape recessed from a tip surface and the outer peripheral surface of the tool main body 2. A plurality of the insert mounting seats 21 are provided in the tool main body 2. The plurality of insert mounting seats 21 are disposed at a distance from each other in the tool circumferential direction. In the present embodiment, five insert mounting seats 21 are provided at an irregular pitch in the tool circumferential direction. Any one of the wiper insert 1 and the rough machining insert 3 is mounted on each of the insert mounting seats 21.

The plurality of insert mounting seats 21 mutually have the same shape. Therefore, the wiper insert 1 and the rough machining insert 3 can be mounted on any desired insert mounting seat 21.

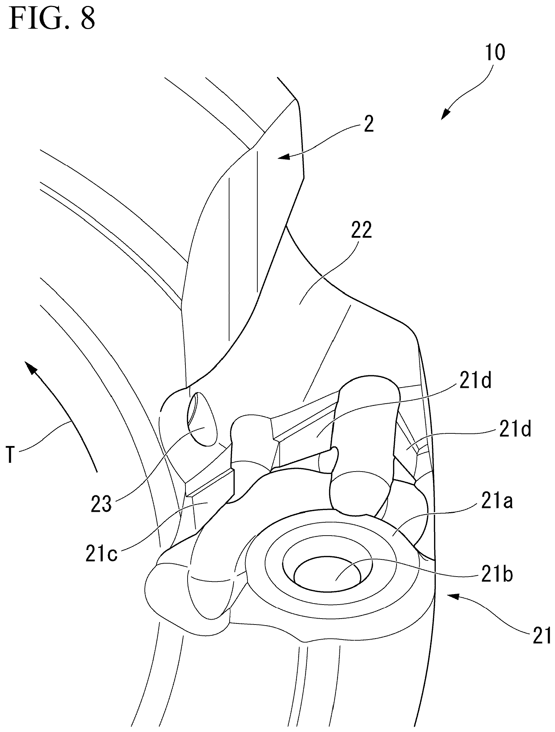

As represented in FIG. 8, the insert mounting seat 21 has a bottom surface 21a, a female screw hole 21b, a first support surface 21c, and a second support surface 21d.

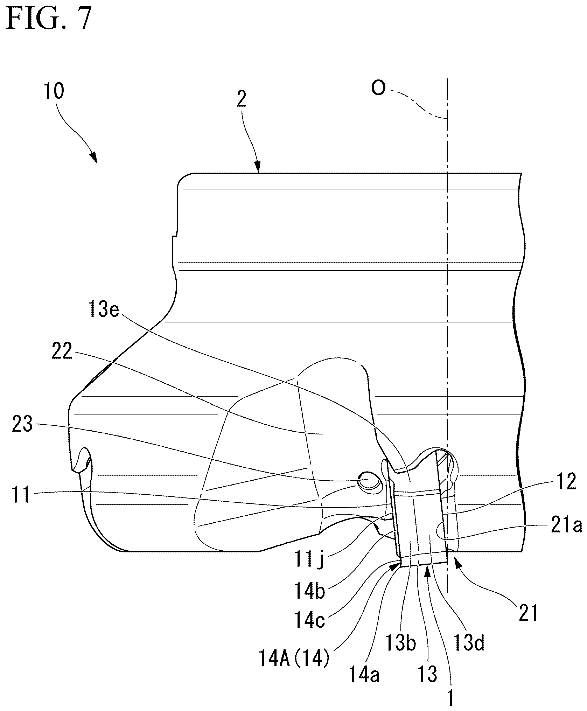

The bottom surface 21a has a planar shape facing the tool rotation direction T. In the present embodiment, the bottom surface 21a is a circular and ring-shaped flat surface. As represented in FIG. 7, the bottom surface 21a is inclined with respect to the tool center axis O. Specifically, the bottom surface 21a is an inclined surface located in the tool rotation direction T as the bottom surface 21a faces the rear end side in the tool axial direction. That is, the bottom surface 21a is a negative inclined surface whose axial rake angle (axial rake) is a negative angle (negative angle).

As represented in FIG. 8, the female screw hole 21b is open to an inner portion (central portion) of the bottom surface 21a. The female screw hole 21b is a hole extending in a direction substantially perpendicular to a spreading direction of the bottom surface 21a. In the present embodiment, the female screw hole 21b is a blind hole having a bottom. The female screw hole 21b may be a through hole. An inner peripheral surface of the female screw hole 21b has a female screw portion.

The first support surface 21c is disposed in the tool rotation direction T from the bottom surface 21a. The first support surface 21c has a planar shape facing outward in the tool radial direction. In the present embodiment, the first support surface 21c is a square flat surface. The first support surface 21c is inclined with respect to the tool center axis O. Specifically, the first support surface 21c is an inclined surface located outward in the tool radial direction as the first support surface 21c faces the rear end side in the tool axial direction.

The second support surface 21d is disposed in the tool rotation direction T from the bottom surface 21a. The second support surface 21d is disposed on the rear end side in the tool axial direction from the first support surface 21c. A pair of the second support surfaces 21d are provided in the insert mounting seat 21. The pair of second support surfaces 21d are aligned in the tool radial direction. Each of the second support surfaces 21d has a planar shape. In the present embodiment, each of the second support surface 21d is a square flat surface.

In the pair of second support surfaces 21d, one second support surfaces 21d located outward in the tool radial direction faces inward in the tool radial direction. The one second support surface 21d is inclined with respect to the tool center axis O. Specifically, the one second support surface 21d is an inclined surface located inward in the tool radial direction as the one second support surface 21d faces the rear end side in the tool axial direction.

In the pair of second support surfaces 21d, the other second support surface 21d located inward in the tool radial direction faces outward in the tool radial direction. The other second support surface 21d is inclined with respect to the tool center axis O. Specifically, the other second support surface 21d is an inclined surface located outward in the tool radial direction as the other second support surface 21d faces the rear end side in the tool axial direction. A displacement amount in which the other second support surface 21d is displaced in the tool radial direction per unit length in the tool axial direction, that is, an inclination angle of the other second support surface 21d with respect to the tool center axis O is larger than an inclination angle of the first support surface 21c with respect to the tool center axis O.

### [Mounting Each Cutting Insert on Insert Mounting Seat]

As represented in FIGS. 5 to 7, the wiper insert 1 is disposed on at least one of the plurality of insert mounting seats 21. In the present embodiment, one wiper insert 1 is provided in the replaceable blade-type milling cutter 10. The wiper insert 1 is fixed to the insert mounting seat 21 by screwing the screw member 4 inserted into the through hole 15 of the wiper insert 1 into the female screw hole 21b. That is, the wiper insert 1 is detachably mounted on the insert mounting seat 21.

One of the pair of polygonal surfaces 11 and 12 of the wiper insert 1 disposed in the insert mounting seat 21 (polygonal surface 11 in the represented example) faces the tool rotation direction T, and the other (polygonal surface 12 in the represented example) faces a counter-tool rotation direction. The seating surface of the polygonal surface 12 (corresponding to the seating surface 11j of the polygonal surface 11) facing the counter-tool rotation direction comes into contact with the bottom surface 21a.

Although not represented in particular, the insert center axis A of the wiper insert 1 disposed in the insert mounting seat 21 is located on the tip side in the tool axial direction as the insert center axis A faces the tool rotation direction T. In addition, the rotation center axis B of the wiper insert 1 disposed in the insert mounting seat 21 is located in the counter-tool rotation direction as the insert center axis A faces the tip side in the tool axial direction. That is, the rotation center axis B is inclined to a negative angle (negative angle) side with respect to the tool center axis O (refer to FIG. 7).

As represented in FIG. 5, out of the pair of first restraint surfaces 13d of the wiper insert 1 disposed in the insert mounting seat 21, one of the first restraint surfaces 13d facing inward in the tool radial direction comes into contact with the first support surface 21c.

Out of the pair of second restraint surfaces 13e of the wiper insert 1 disposed in the insert mounting seat 21, one of the second restraint surfaces 13e located outward in the tool radial direction and facing outward in the tool radial direction comes into contact with one of the second support surfaces 21d facing inward in the tool radial direction, out of the pair of second support surfaces 21d.

Out of the pair of second restraint surfaces 13e of the wiper insert 1 disposed in the insert mounting seat 21, the other second restraint surface 13e located inward in the tool radial direction and facing inward in the tool radial direction comes into contact with the other second support surface 21d facing outward in the tool radial direction, out of the pair of second support surfaces 21d. A configuration may be adopted in which the other second restraint surface 13e and the other second support surface 21d do not come into contact with each other.

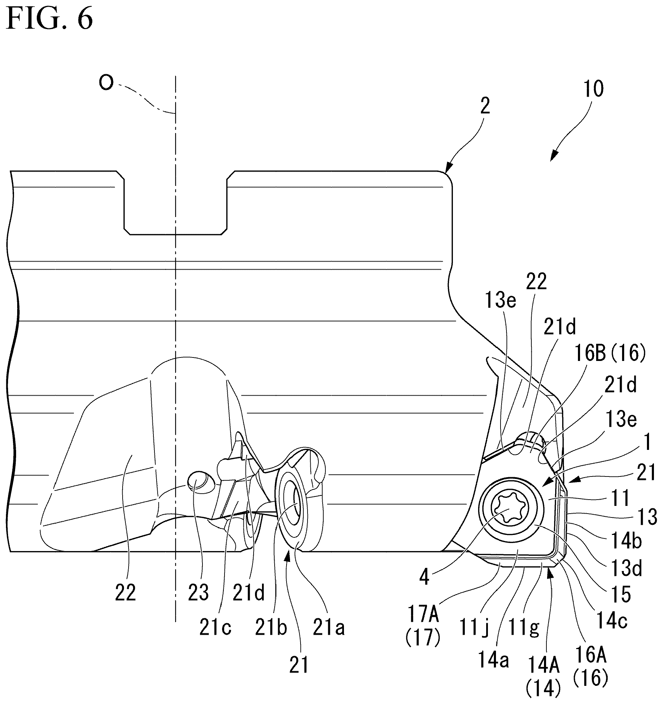

As represented in FIGS. 6 and 7, the first cutting edge (wiper blade) 14a of the wiper insert 1 disposed in the insert mounting seat 21 protrudes to the tip side from the tool main body 2 in the tool axial direction. That is, the first cutting edge 14a is disposed to protrude to the tip side from the tip surface of the tool main body 2 in the tool axial direction. The first cutting edge 14a extends in the tool radial direction.

In the wiper insert 1 mounted on the insert mounting seat 21, an axial rake angle (axial rake) of the first cutting edge 14a is a positive angle (positive angle). That is, the first rake face 11g of the first cutting edge 14a is inclined to the positive angle side with respect to a " reference surface " which is a virtual plane (not represented) including the tool center axis O and passing through a portion on the first cutting edge 14a. Specifically, the first rake face 11g is a positive inclined surface located in the counter-tool rotation direction as the first rake face 11g faces the rear end side from the first cutting edge 14a in the tool axial direction.

The second cutting edge 14b of the wiper insert 1 disposed in the insert mounting seat 21 protrudes outward in the tool radial direction from the tool main body 2. That is, the second cutting edge 14b is disposed to protrude outward in the tool radial direction from the outer peripheral surface of the tool main body 2. The second cutting edge 14b extends in the tool axial direction.

The corner cutting edge 14c of the wiper insert 1 disposed in the insert mounting seat 21 protrudes to the tip side in the tool axial direction and outward in the tool radial direction from the tool main body 2. The corner cutting edge 14c extends toward the rear end side in the tool axial direction as the corner cutting edge 14c faces outward in the tool radial direction.

The rough machining insert 3 is disposed in the other insert mounting seat 21 different from the insert mounting seat 21 where the wiper insert 1 is disposed. The rough machining insert 3 is disposed in at least two or more of the plurality of insert mounting seats 21. That is, a plurality of the rough machining inserts 3 are provided in the replaceable blade-type milling cutter 10.

As represented in FIGS. 9 and 10, the screw member 4 inserted into the through hole 35 of the rough machining insert 3 is screwed into the female screw hole 21b. In this manner, the rough machining insert 3 is fixed to the insert mounting seat 21. That is, the rough machining insert 3 is detachably mounted on the insert mounting seat 21.

One (polygonal surface 31 in the represented example) of the pair of polygonal surfaces 31 and 32 of the rough machining insert 3 disposed in the insert mounting seat 21 faces the tool rotation direction T, and the other (polygonal surface 32 in the represented example) faces the counter-tool rotation direction. The seating surface (corresponding to the seating surface 31a of the polygonal surface 31) of the polygonal surface 32 facing the counter-tool rotation direction comes into contact with the bottom surface 21a.

Although not represented in particular, the insert center axis of the rough machining insert 3 disposed in the insert mounting seat 21 is located on the tip side in the tool axial direction as the insert center axis faces the tool rotation direction T. That is, as in the wiper insert 1, the insert center axis of the rough machining insert 3 is inclined to the negative angle (negative angle) side with respect to a virtual plane perpendicular to the tool center axis O.

Out of the six restraint surfaces 33a of the rough machining insert 3 disposed in the insert mounting seat 21, one restraint surface 33a facing inward in the tool radial direction comes into contact with the first support surface 21c.

Out of the six restraint surfaces 33a of the rough machining insert 3 disposed in the insert mounting seat 21, the other restraint surface 33a facing outward in the tool radial direction comes into contact with one second support surface 21d facing inward in the tool radial direction, out of the pair of second support surfaces 21d.

Out of the six restraint surfaces 33a of the rough machining insert 3 disposed in the insert mounting seat 21, the other restraint surface 33a facing inward in the tool radial direction comes into contact with the other second support surface 21d facing outward in the tool radial direction, out of the pair of second support surfaces 21d. A configuration may be adopted in which the restraint surface 33a and the other second support surface 21d do not come into contact with each other.

The major cutting edge 34a of the rough machining insert 3 disposed in the insert mounting seat 21 protrudes outward in the tool radial direction from the tool main body 2. That is, the major cutting edge 34a is disposed to protrude outward in the tool radial direction from the outer peripheral surface of the tool main body 2. The major cutting edge 34a extends in the tool axial direction.

Although not represented, a rotation trajectory of the major cutting edge 34a around the tool center axis O is located outward in the tool radial direction from a rotation trajectory of the second cutting edge 14b of the wiper insert 1 around the tool center axis O. That is, the major cutting edge 34a is disposed outward in the tool radial direction from the second cutting edge 14b. In other words, the second cutting edge 14b is disposed inward in the tool radial direction from the major cutting edge 34a. A distance in the tool radial direction between the rotation trajectory of the major cutting edge 34a around the tool center axis O and the rotation trajectory of the second cutting edge 14b around the tool center axis O, that is, a radius difference between the respective rotation trajectories is 0.4 mm or smaller, for example.

In addition, each of the rotation trajectories of the second flank face 13b and the first restraint surface 13d of the wiper insert 1 around the tool center axis O is located inward in the tool radial direction from the rotation trajectory of the major cutting edge 34a of the rough machining insert 3 around the tool center axis O.

The minor cutting edge 34b of the rough machining insert 3 disposed in the insert mounting seat 21 protrudes to the tip side from the tool main body 2 in the tool axial direction. In other words, the minor cutting edge 34b is disposed to protrude to the tip side from the tip surface of the tool main body 2 in the tool axial direction. The minor cutting edge 34b extends in the tool radial direction.

Although not represented, the rotation trajectory of the minor cutting edge 34b around the tool center axis O is located on the rear end side in the tool axial direction from the rotation trajectory of the first cutting edge 14a of the wiper insert 1 around the tool center axis O. That is, the minor cutting edge 34b is disposed on the rear end side in the tool axial direction from the first cutting edge 14a. In other words, the first cutting edge 14a is disposed on the tip side in the tool axial direction from the minor cutting edge 34b.

The corner edge 34c of the rough machining insert 3 disposed in the insert mounting seat 21 protrudes to the tip side in the tool axial direction and outward in the tool radial direction from the tool main body 2. The corner edge 34c extends toward the rear end side in the tool axial direction as the corner edge 34c faces outward in the tool radial direction.

### [Chip Pocket]

As represented in FIGS. 5 to 10, the chip pocket 22 is disposed in the tip portion of the tool main body 2 in the tool axial direction. The chip pocket 22 has a recessed shape recessed from the tip surface and the outer peripheral surface of the tool main body 2. A plurality of the chip pockets 22 are provided in the tool main body 2. The plurality of chip pockets 22 are disposed at a distance from each other in the tool circumferential direction. In the present embodiment, five chip pockets 22 are provided at an irregular pitch in the tool circumferential direction. Each of the chip pockets 22 is disposed adjacent to each of the insert mounting seats 21 in the tool rotation direction T, and is connected to each of the insert mounting seats 21.

A length in which the chip pocket 22 is recessed toward the rear end side from the tip surface of the tool main body 2 in the tool axial direction, that is, a depth in the tool axial direction is longer than a length in which the insert mounting seat 21 is recessed toward the rear end side from the tip surface of the tool main body 2 in the tool axial direction. The length in which the chip pocket 22 is recessed inward in the tool radial direction from the outer peripheral surface of the tool main body 2, that is, the depth in the tool radial direction is longer than the length in which the insert mounting seat 21 is recessed inward in the tool radial direction from the outer peripheral surface of the tool main body 2.

### [Coolant Hole]

The coolant hole 23 extends into the tool main body 2. A plurality of the coolant holes 23 are provided in the tool main body 2. The plurality of coolant holes 23 are disposed at a distance from each other in the tool circumferential direction. The number of the coolant holes 23 is the same as the number of the insert mounting seats 21, or is a multiple thereof. Each of the coolant holes 23 penetrates the tool main body 2. Although not represented, the coolant hole 23 is connected to coolant supply means such as a pump through a flow path and a pipe inside a spindle of a machine tool. A coolant such as a cutting fluid or compressed air is supplied to the coolant hole 23 from the coolant supply means.

A portion including at least an ejection port of the coolant hole 23 is located in the counter-tool rotation direction as the portion faces outward in the tool radial direction. A portion including at least an ejection port of the coolant hole 23 is located on the tip side in the tool axial direction as the portion faces outward in the tool radial direction. An end portion on the outside of the coolant hole 23 in the tool radial direction, that is, the ejection port is open to the chip pocket 22. The coolant hole 23 ejects a coolant toward the cutting edges 14 and 34 of the respective cutting inserts 1 and 3 mounted on the insert mounting seat 21 and a machining portion of a work material.

### [Operational Effects Achieved by Present Embodiment]

In the replaceable blade-type milling cutter 10 of the present embodiment, two types of the cutting inserts such as the rough machining (standard machining) insert 3 and the wiper insert 1 can be mounted in any desired manner on the plurality of insert mounting seats 21 mutually having the same shape.

According to the wiper insert 1 of the present embodiment, the second cutting edge 14b is disposed inward from the first restraint surface 13d in the insert radial direction. Therefore, the second cutting edge 14b is prevented from coming into contact with the work material. Specifically, in the replaceable blade-type milling cutter 10 of the present embodiment, the second cutting edge 14b of the wiper insert 1 is disposed to be retracted inward in the tool radial direction from the rotation trajectory of the major cutting edge 34a of the rough machining insert 3 around the tool center axis O. Therefore, the wiper insert 1 mainly cuts into the work material only with the first cutting edge (wiper blade) 14a, and thus, accuracy in a finishing operation is stably improved.

When the wiper insert 1 is mounted on the insert mounting seat 21 by being front-back inverted (rotated 180°) around the rotation center axis B, the first restraint surface 13d comes into contact with the first support surface 21c of the insert mounting seat 21. Therefore, the wiper insert 1 can be stably fixed to the insert mounting seat 21 even when the first cutting edge 14a of any polygonal surface out of the pair of polygonal surfaces 11 and 12 is used. That is, a double surface type can be adopted as the wiper insert 1, and thus, a tool life can be extended.

As described above, according to the wiper insert 1 of the present embodiment, the wiper insert 1 can be mounted in any desired manner on the plurality of insert mounting seats 21 mutually having the same shape. A finishing operation can be performed by using the wiper blade 14a while suppressing contact between the cutting edge other than the wiper blade 14a and the work material. A tool life can be extended while machining accuracy is improved with the front-back inverted symmetrical shape.

In addition, the replaceable blade-type milling cutter 10 of the present embodiment includes the above-described wiper insert 1. Therefore, the insert can be more freely disposed in the plurality of insert mounting seats 21, and the tool life can be extended while the machining accuracy is improved.

In addition, in the present embodiment, the second flank face 13b has an inclined surface shape inclined with respect to the insert center axis A. The first restraint surface 13d is connected to the second flank face 13b in the insert axial direction, and has a planar shape parallel to the insert center axis A.

In this case, configurations of the second flank face 13b and the first restraint surface 13d can be simplified while the second cutting edge 14b is retracted as described above. Seating stability of the wiper insert 1 on the insert mounting seat 21 is improved by the first restraint surface 13d having the simplified configuration, and insert manufacturing is facilitated.

In addition, in the present embodiment, the first rake face 11g has an inclined surface shape toward the back surface side in the insert axial direction as the first rake face 11g faces inward in the insert radial direction from the first cutting edge 14a, and the seating surface 11j is disposed to protrude to the front surface side in the insert axial direction from the first cutting edge 14a and the first rake face 11g.

In this case, the first rake face 11g is inclined to the positive angle (positive angle) side. Therefore, cutting quality of the first cutting edge 14a is stably improved. In addition, chips generated from the first cutting edge 14a are likely to be broken by hitting a step (step portion 11k) between the first rake face 11g and the seating surface 11j. Therefore, chip disposability is improved. In addition, the first cutting edge 14a and the first rake face 11g do not protrude from the seating surface 11j in the insert axial direction. Therefore, when the wiper insert 1 is front-back inverted and mounted on the insert mounting seat 21, the first cutting edge 14a or the first rake face 11g can be prevented from interfering with the insert mounting seat 21.

In addition, in the present embodiment, the seating surface 11j is disposed to protrude to the front surface side in the insert axial direction from the second cutting edge 14b and the second rake face 11h.

In this case, the second cutting edge 14b and the second rake face 11h do not protrude from the seating surface 11j in the insert axial direction. Therefore, when the wiper insert 1 is front-back inverted and mounted on the insert mounting seat 21, the second cutting edge 14b or the second rake face 11h can be prevented from interfering with the insert mounting seat 21.

In addition, in the present embodiment, the seating surface 11j is disposed to protrude to the front surface side in the insert axial direction from the corner cutting edge 14c and the corner rake face 11i.

In this case, the corner cutting edge 14c and the corner rake face 11i do not protrude from the seating surface 11j in the insert axial direction. Therefore, when the wiper insert 1 is front-back inverted and mounted on the insert mounting seat 21, the corner cutting edge 14c or the corner rake face 11i can be prevented from interfering with the insert mounting seat 21.

In addition, in the present embodiment, the cutting edge 14 has the corner cutting edge 14c connecting the first cutting edge 14a and the second cutting edge 14b. As represented in FIG. 2, when viewed in the insert axial direction, each of the included angle between the first cutting edge 14a and the corner cutting edge 14c and the included angle between the second cutting edge 14b and the corner cutting edge 14c is an obtuse angle.

For example, compared to a configuration in which the first cutting edge 14a and the second cutting edge 14b are directly connected unlike the present embodiment, according to the above-described configuration of the present embodiment, strength of the cutting edge 14 is increased, and a defect of the edge tip is prevented.

In addition, in the present embodiment, as represented in FIG. 2, the first cutting edge 14a has a convex curve shape bulging outward in the insert radial direction, when viewed in the insert axial direction.

In this case, for example, even when the tool center axis O of the tool main body 2 on which the wiper insert 1 is mounted is slightly inclined with respect to the work material due to cutting resistance during a cutting operation, accuracy in a machined surface is stably ensured by the first cutting edge 14a.

In addition, in the present embodiment, as represented in FIG. 1, the outer peripheral surface 13 of the wiper insert 1 has the first restraint surface 13d and the second restraint surface 13e. In addition, as represented in FIGS. 5 to 8, the insert mounting seat 21 has the bottom surface 21a coming into contact with the seating surfaces 11j of the polygonal surfaces 11 and 12, the first support surface 21c coming into contact with the first restraint surface 13d, and the second support surface 21d coming into contact with the second restraint surface 13e.

In this case, the wiper insert 1 is restrained to the insert mounting seat 21 in the insert radial direction and the insert circumferential direction by the first restraint surface 13d and the second restraint surface 13e. Seating stability of the wiper insert 1 on the insert mounting seat 21 is further improved.

### [Other Configurations included in Present Invention]

The present invention is not limited to the above-described embodiments. For example, as will be described below, the configurations can be changed within the scope not departing from the concept of the present invention.

In the above-described embodiment, as represented in FIG. 2, an example has been described as follows. When one polygonal surface 11 is viewed in a front view in the insert axial direction, a clockwise direction around the insert center axis A corresponds to the first side C1 in the insert circumferential direction, and a counterclockwise direction corresponds to the second side C2 in the insert circumferential direction. However, the present invention is not limited thereto. That is, when one polygonal surface 11 is viewed from the front surface in the insert axial direction, the counterclockwise direction around the insert center axis A may correspond to the first side C1 in the insert circumferential direction, and the clockwise direction may correspond to the second side C2 in the insert circumferential direction. That is, the present invention is also applicable to a wiper insert and a replaceable blade-type milling cutter which are different from those of the above-described embodiment.

In the above-described embodiment, an example has been described as follows. The pair of polygonal surfaces 11 and 12 of the wiper insert 1 have the plurality of connecting side portions 11m, 11n, 11p, and 11q in the outer peripheral edges of the respective polygonal surface 11 and 12. However, the present invention is not limited thereto. At least one or more of the plurality of connecting side portions 11m, 11n, 11p, and 11q may not be provided.

According to the present invention, all of the configurations described in the above-described embodiments and modification examples may be combined with each other within the scope not departing from the concept of the present invention. Alternatively, additions, omissions, or substitutions of the configurations, and other modifications can be made. In addition, the present invention is not limited to the above-described embodiments, and is limited only by the appended claims.

### [Industrial Applicability]

According to the wiper insert of the present invention, the wiper insert can be mounted in any desired manner on the plurality of insert mounting seats mutually having the same shape. A finishing operation can be performed by using the wiper blade while suppressing contact between the cutting edge other than the wiper blade and the work material. A tool life can be extended while machining accuracy is improved with the front-back inverted symmetrical shape. In addition, the replaceable blade-type milling cutter of the present invention includes the above-described wiper insert. Therefore, the insert can be more freely disposed in the plurality of insert mounting seats, and the tool life can be extended while improving the machining accuracy. Therefore, the present invention is industrially applicable.

### [Reference Signs List]

1: Wiper insert
2: Tool main body
3: Rough machining (standard machining) insert
10: Replaceable blade-type milling cutter
11, 12: Polygonal surface
11a, 11b, 11c, 11d, 11e, 11f: Side portion
11g: First rake face
11h: Second rake face
11j: Seating surface
13: Outer peripheral surface
13a: First flank face
13b: Second flank face
13d: First restraint surface
13e: Second restraint surface
14 (14A, 14B): Cutting edge
14a: First cutting edge
14b: Second cutting edge
14c: Corner cutting edge
16 (16A, 16B, 16C): First corner portion
16A: Predetermined first corner portion
17 (17A): Second corner portion
21: Insert mounting seat
21a: Bottom surface
21c: First support surface
21d: Second support surface
34a: Major cutting edge
34b: Minor cutting edge
A: Insert center axis
B: Rotation center axis
C1: First side in insert circumferential direction
C2: Second side in insert circumferential direction
O: Tool center axis
θ1: First included angle
θ2: Second included angle

## Claims

1. A wiper insert comprising:
a pair of polygonal surfaces facing mutually opposite sides in an insert axial direction in which an insert center axis extends;
an outer peripheral surface connected to the pair of polygonal surfaces and facing outward in an insert radial direction; and
a cutting edge disposed in a ridge line portion where the polygonal surface and the outer peripheral surface are connected,
wherein the polygonal surface has
a plurality of side portions disposed along an outer peripheral edge of the polygonal surface,
a first corner portion located between a pair of the side portions aligned in an insert circumferential direction, and
a second corner portion disposed at a position different from a position of the first corner portion in the insert circumferential direction and located between a pair of the side portions aligned in the insert circumferential direction,
three first corner portions and three second corner portions are alternately aligned on the polygonal surface in the insert circumferential direction,
when viewed in the insert axial direction, a first included angle between the pair of side portions located on both sides of the first corner portion in the insert circumferential direction is smaller than a second included angle between the pair of side portions located on both sides of the second corner portion in the insert circumferential direction,
the cutting edge has
a first cutting edge disposed in the side portion on a first side of a predetermined first corner portion of the three first corner portions in the insert circumferential direction, and performs a finishing operation on a work material, and
a second cutting edge disposed in the side portion on a second side of the predetermined first corner portion in the insert circumferential direction,
the outer peripheral surface has
a first flank face connected to the first cutting edge,
a second flank face connected to the second cutting edge, and
a first restraint surface located on a side opposite to the second cutting edge of the second flank face in the insert axial direction and disposed outward from the second cutting edge in the insert radial direction, and
when viewed in the insert axial direction, an insert shape is rotationally symmetrical by 180° around a rotation center axis passing through the second corner portion adjacent to the first side of the predetermined first corner portion in the insert circumferential direction and the insert center axis.

2. The wiper insert according to Claim 1,
wherein the second flank face has an inclined surface shape inclined with respect to the insert center axis, and is located outward in the insert radial direction, as the second flank face is away from the second cutting edge in the insert axial direction, and
the first restraint surface is connected to the second flank face, and has a planar shape parallel to the insert center axis.

3. The wiper insert according to Claim 1 or 2,
wherein the polygonal surface has
a first rake face connected to the first cutting edge, and
a seating surface disposed inward from the first rake face in the insert radial direction,
the first rake face has an inclined surface shape facing the other polygonal surface side from the polygonal surface in the insert axial direction, as the first rake face faces inward in the insert radial direction from the first cutting edge, and
the seating surface protrudes in the insert axial direction from the first cutting edge and the first rake face.

4. The wiper insert according to Claim 3,
wherein the polygonal surface has a second rake face connected to the second cutting edge, and
the seating surface is disposed inward from the second rake face in the insert radial direction, and protrudes in the insert axial direction from the second cutting edge and the second rake face.

5. The wiper insert according to any one of Claims 1 to 4,
wherein the cutting edge has a corner cutting edge connected to an end portion on the second side of the first cutting edge in the insert circumferential direction and an end portion on a first side of the second cutting edge in the insert circumferential direction, and
when viewed in the insert axial direction, each of an included angle between the first cutting edge and the corner cutting edge and an included angle between the second cutting edge and the corner cutting edge is an obtuse angle.

6. The wiper insert according to any one of Claims 1 to 5,
wherein when viewed in the insert axial direction, the first cutting edge has a convex curve shape bulging outward in the insert radial direction.

7. The wiper insert according to any one of Claims 1 to 6,
wherein the outer peripheral surface has a second restraint surface adjacent to the second side of the first restraint surface in the insert circumferential direction.

8. A replaceable blade-type milling cutter comprising:
a tool main body having a plurality of insert mounting seats disposed at a distance from each other in a tool circumferential direction in a tip portion in a tool axial direction in which a tool center axis extends;
the wiper insert according to any one of Claims 1 to 7, disposed in at least one of the plurality of insert mounting seats; and
a rough machining insert disposed in the insert mounting seat different from the insert mounting seat in which the wiper insert is disposed,
wherein the rough machining insert has
a major cutting edge protruding outward in a tool radial direction from the tool main body, and
a minor cutting edge protruding to a tip side from the tool main body in the tool axial direction,
the plurality of insert mounting seats mutually have the same shape,
the first cutting edge is disposed on the tip side in the tool axial direction from the minor cutting edge, and
the second cutting edge is disposed inward from the major cutting edge in the tool radial direction.

9. The replaceable blade-type milling cutter according to Claim 8,
wherein the outer peripheral surface of the wiper insert has a second restraint surface disposed at a position different from a position of the first restraint surface in the insert circumferential direction, and
the insert mounting seat has
a bottom surface coming into contact with a seating surface of the polygonal surface,
a first support surface coming into contact with the first restraint surface, and
a second support surface coming into contact with the second restraint surface.
